# EUROPEAN PATENT APPLICATION

(11) **EP 1 016 676 A2**
(43) Date of publication of application: **05.07.2000**
(21) Application number: 99308944.0
(22) Date of filing: 10.11.1999
(51) Int. Cl.: C08F 4/00

(54) **A catalyst system for the preparation of polyethylene**

(30) Priority: 19.11.1998 US 195736
(71) Applicant: UNION CARBIDE CHEMICALS & PLASTICS TECHNOLOGY CORPORATION, Danbury, Connecticut 06817-0001 (US)
(72) Inventor: Zoeckler, Mary Therese, Clinton, New Jersey 08809 (US); Schramm, Kathleen Dahl, Neshanic, New Jersey 08853 (US); Smale, Mark Wilton, Clinton, New Jersey 08809 (US)
(74) Representative: Hayes, Adrian Chetwynd

(57) **Abstract**

A catalyst system comprising (a) as a precursor, a solid complex comprising a magnesium halide; a titanium compound containing at least one bidentate ligand wherein the titanium is in the tetravalent state; and, as an electron donor, one or more alcohols, ethers ,or ketones, said complex being impregnated into an inert support or spray dried from an electron donor solution containing an inert filler; (b) as a cocatalyst, one or more alkyl aluminum compounds; and, optionally, (c ) a halocarbon promoter.

## Description

### Technical Field

This invention relates to a versatile catalyst system for the preparation of polyethylene.

### Background Information

Industry is constantly seeking catalyst systems, which fulfill various needs in the production of polyethylene. For example, a catalyst system, which will provide lower hexane extractables without the need for the expensive trimethylaluminum cocatalyst; a catalyst system which performs at a higher activity level; a catalyst system whose performance can be optimized to match various product and process requirements; and/or a catalyst system, which has improved thermal stability. In sum, a versatile catalyst system, which can be depended upon to overcome the deficiencies of prior art catalyst systems insofar as polyethylene is concerned.

### Disclosure of the Invention

An object of this invention, therefore, is to provide a catalyst system, which is capable of overcoming the deficiencies of the prior art catalyst systems, and a process for making a catalyst precursor for such a system. Other objects and advantages will become apparent hereinafter.

According to the present invention such a catalyst system has been discovered. The catalyst system comprises (a) as a precursor, a solid complex comprising a magnesium halide; a titanium compound containing at least one bidentate ligand wherein the titanium is in the tetravalent state; and, as an electron donor, one or more alcohols, ethers, or ketones, said complex being impregnated into an inert support or spray dried from an electron donor solution containing an inert filler; (b) as a cocatalyst, one or more alkyl aluminum compounds; and, optionally, (c ) a halocarbon promoter.

Another embodiment of this invention is a process for making the catalyst precursor described above. The process comprises (a) combining a tetravalent titanium compound with a compound capable of providing a bidentate ligand therefor, under reaction conditions; (b) adding the product of step (a) to a solution of a magnesium halide in an electron donor, under reaction conditions, to form a complex; and (c) impregnating complex from step (b), in solution form, into an inert support or spray drying the complex from an electron donor solution containing an inert filler.

### Description of the Preferred Embodiment(s)

The catalyst system which is the subject of this invention can be used in liquid phase or gas phase processes such as slurry, solution, fluidized bed, or stirred bed processes. It can be used in one reactor to produce monomodal polyethylene or in two or more reactors connected in series to provide in situ multimodal polyethylene blends. The polyethylene can be a homopolymer or a copolymer of ethylene and one or more alpha-olefins having 3 to 12 carbon atoms, preferably one or two alpha-olefin comonomers. The alpha-olefins can be, for example, propylene, 1-butene, 1-hexene, 4-methyl-1-pentene, and 1-octene. Dienes can also introduced into the polymer along with ethylene and the alpha-olefin(s). Examples of useful dienes are ethylidene norbornene, butadiene, and 1,4-hexadiene, and dicyclopentadiene.

The catalyst precursor is prepared by first forming a solid particulate component from magnesium halide; a titanium compound containing at least one bidentate ligand; an electron donor; and an inert support or an inert filler. The solid component is then, optionally, treated with a chlorinating agent. It is then activated by bringing it into contact with a cocatalyst.

The magnesium halides include magnesium chloride, magnesium bromide, and magnesium iodide. Anhydrous magnesium chloride is preferred.

The titanium compound is one in which the titanium is in the tetravalent state and contains at least one bidentate ligand, preferably 1 to 4 bidentate ligands. The bidentate ligands are exemplified by diketone ligands, especially 2,4 diketones substituted in the 1 and 5 positions; 1,3 diketones substituted in the 2 position; beta-keto-esters, and 2-acetylcycloalkanones. An example of the titanium compound is titanium(acetylacetonate)ₙX₄₋ₙ wherein X is a halide or OR wherein each R is independently an alkyl group having 1 to 10 carbon atoms. The titanium compounds wherein X = Cl are prepared according to the method described in Wilkin et al, Inorganic Synthesis, Volume XIX, page 145, John Wiley & Sons.

The electron donor is an organic Lewis base, liquid at temperatures in the range of about 0 degrees C to about 200 degrees C, in which the magnesium and titanium compounds are soluble. The electron donor can be an aliphatic ketone, an aliphatic alcohol, an alkyl or cycloalkyl ether, or mixtures thereof, each electron donor having 1 to 20 carbon atoms. Among these electron donors, the preferred are alkyl and cycloalkyl ethers having 2 to 20 carbon atoms; dialkyl, diaryl, and alkylaryl ketones having 3 to 20 carbon atoms; and alkyl alcohols having 1 to 20 carbon atoms. Preferred electron donors are the ethers and alcohols. The most preferred electron donors are tetrahydrofuran and isopropanol. Other examples of suitable electron donors are ethyl ether, dioxane, di-n-propyl ether, dibutyl ether, tetrahydropyran, ethanol, and butanol.

While an excess of electron donor is used initially to provide the reaction product of titanium compound and electron donor, the reaction product finally contains about 1 to about 20 moles of electron donor per mole of titanium compound and preferably about 1 to about 10 moles of electron donor per mole of titanium compound.

In those cases where it is desired to support the precursor, silica is the preferred support. Using a support such as silica having the required particle size distribution will produce a resin having the required particle size distribution by substantial replication. Other suitable supports are inorganic oxides such as aluminum phosphate, alumina, silica/alumina mixtures, and silica modified with reagents capable of reacting with surface silanols such aluminum compounds exemplified by alkylaluminums and aluminum halides, boron alkyls and halides, dialkyl zincs, and hexamethyldisilazane. Examples of organic supports are various polyethylenes and polypropylenes. A typical support is a solid, particulate, porous material essentially inert to the polymerization. It is used as a dry powder having an average particle size of about 10 to about 250 microns and preferably about 30 to about 100 microns; a surface area of at least 200 square meters per gram and preferably at least about 250 square meters per gram; and a pore size of at least about 100 angstroms and preferably at least about 200 angstroms. A typical silica support having an average particle size of 75 microns and a particle size distribution span of 0.9 to 1.5 can, for example, be obtained by fractionating a silica support having an average particle size of 80 microns and a particle size distribution span of 1.9. Generally, the amount of support used is that which will provide about 0.1 to about 0.5 millimole of titanium per gram of support and preferably about 0.2 to about 0.3 millimole of titanium per gram of support. Impregnation of the above mentioned catalyst precursor into a silica support can be accomplished by mixing the precursor and silica gel in the electron donor solvent or other solvent followed by solvent removal under reduced pressure.

The catalyst precursor can also be obtained by spray drying. In this option, a solution of the precursor is prepared and slurried with an inert filler. The slurry is then spray dried by methods such as the method disclosed in United States Patent 5,290,745. Generally, the amount of inert filler used is that which will provide about 0.3 to about 2.5 millimole of titanium per gram of spray-dried precursor. The fillers, which are added to the solution prior to spray drying, include any organic or inorganic compounds, which are inert to the titanium compound and the final active catalyst, such as silicon dioxide in the form of fumed silica, titanium dioxide, polystyrene, rubber modified polystyrene, magnesium chloride, and calcium carbonate. A preferred filler is a hydrophobic fumed silica. The fillers can be used individually or in combination. The spray dried precursor is about 10 to about 95 percent by weight filler. Typical Mg/Ti atomic ratios in the spray dried precursor range from about 2:1 to about 10:1. Average particle size can be adjusted by process means during spray-drying, and can be, furthermore, altered by separation techniques after spray-drying. Typical average particle sizes range from about 8 to about 50 microns using standard shaping and sizing techniques.

The optional chlorinating agent can be boron trichloride, other Group III chlorides, or an alkyl aluminum chloride having the formula AlRₐCl_{b}H_{c} wherein each R is independently a saturated aliphatic hydrocarbon radical having 1 to 14 carbon atoms; b is 1 to 3; c is 0 or 1; and a+b+c = 3. Preferred chlorinating agents include alkylaluminum mono- and dichlorides wherein each alkyl radical has 1 to 6 carbon atoms. A particularly preferred chlorinating agent is dimethylaluminum chloride (DMAC). Other chlorinating agents are ethylaluminum dichloride (EADC); diethylaluminum chloride (DEAC); and methylaluminum dichloride. If it is desired to use a chlorinating agent, about 0.10 to about 10 moles, and preferably about 0.15 to about 2.5 moles, of chlorinating agent can be used per mole of electron donor. The molar ratio of chlorinating agent to titanium can be in the range of about 1:1 to about 10:1 and is preferably in the range of about 2:1 to about 6:1. The chlorinating agent is preferably reacted with the solid precursor in a mix tank. It is found that, as opposed to some prior art processes, the catalyst precursor produced in this way is indefinitely stable.

The cocatalyst is an alkyl aluminum or alumoxane compound, and can be represented by the formulas R₃Al and (RAlO)ₙ wherein each R is independently alkyl, cycloalkyl, aryl, or hydrogen; at least one R is hydrocarbyl; and two or three R radicals can be joined to form a heterocyclic structure. Each R, which is a hydrocarbyl radical, can have 1 to 20 carbon atoms, and preferably has 1 to 10 carbon atoms. Examples of hydrocarbyl aluminum compounds are as follows: triisobutylaluminum, tri-n-hexylaluminum, diisobutylaluminum hydride, dihexylaluminum hydride, diisobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. The aluminoxanes can be methyl or modified methyl aluminoxane. A preferred cocatalyst is triethylaluminum (TEAL). About 10 to about 400 moles, and preferably about 10 to about 100 moles of cocatalyst, per mole of titanium compound can be used.

Optionally, a halocarbon promoter can be added to the reactor(s) with the cocatalyst. The promoter can be (a) methylene dichloride; (b) various FREON™ or UCON™ fluorocarbons or chlorofluorocarbons, e.g., CX₄ or CX₃CX₃ wherein X is Cl or F and there is at least one F; or (c) chloroform. Promotors (a) and (b) are preferred. About 0.01 to about 10 moles, and preferably about 0.2 to about 1 mole, of promoter can be used per mole of cocatalyst.

In a typical process, the catalyst system, which includes the solid precursor and the cocatalyst, is added to the reactor. Polymerization is conducted substantially in the absence of catalyst poisons such as moisture, oxygen, carbon monoxide, carbon dioxide, and acetylene.

In a single reactor polymerization, the polyethylene obtained has a melt index in the range of about 0.01 to about 1000 grams per 10 minutes; a flow index in the range of about 0.3 to about 40,000 grams per 10 minutes; a melt flow ratio in the range of about 25 to about 45; a density in the range of 0.880 to 0.967 gram per cubic centimeter; a molecular weight in the range if about 5000 to about 500,000; a PDI (polydispersity index) in the range of about 3 to about 8 [this is also referred to as the Mw/Mn ratio, and is a measure of the breadth of the molecular weight distribution; Mw stands for weight average molecular weight and Mn stands for number average molecular weight].

Melt index is determined under ASTM D-1238, Condition E. It is measured at 190°C and 2.16 kilograms and reported as grams per 10 minutes. Flow index is determined under ASTM D-1238, Condition F. It is measured at 190°C and 10 times the weight used in determining the melt index, and reported as grams per 10 minutes. Melt flow ratio is the ratio of flow index to melt index.

In the typical polymerization process, the heretofore described catalyst system, ethylene, alpha-olefin(s), and, optionally, a diene and hydrogen are continuously fed into the reactor. The mole ratio of alpha-olefin (optional) to ethylene can be in the range of about 0.01:1 to about 1.2:1, and is adjusted to provide the desired density. The mole ratio of hydrogen (optional) to ethylene can be in the range of about 0.01:1 to about 2:1, and is adjusted to provide the desired average molecular weight. The operating temperature is generally in the range of about 70 degrees C to about 110 degrees C. Preferred operating temperatures vary depending on the density desired, i.e., lower temperatures for lower densities and higher temperatures for higher densities. The pressure, i.e., the total pressure in the reactor, can be in the range of about 200 to about 450 psi and is preferably in the range of about 280 to about 350 psig. The balance of the total pressure is provided by the gaseous comonomers other than ethylene and an inert gas such as nitrogen.

A typical fluidized bed reactor can be described as follows: The bed is usually made up of the same granular resin that is to be produced in the reactor. Thus, during the course of the polymerization, the bed comprises formed polymer particles, growing polymer particles, and catalyst particles fluidized by polymerization and modifying gaseous components introduced at a flow rate or velocity sufficient to cause the particles to separate and act as a fluid. The fluidizing gas is made up of the initial feed, make-up feed, and cycle (recycle) gas, i.e., comonomers and, if desired, modifiers and/or an inert carrier gas.

The essential parts of the reaction system are the vessel, the bed, the gas distribution plate, inlet and outlet piping, a compressor, cycle gas cooler, and a product discharge system. In the vessel, above the bed, there is a velocity reduction zone, and, in the bed, a reaction zone. Both are above the gas distribution plate.

A typical fluidized bed reactor is described in United States patent 4,482,687, and a typical fluidized bed polymerization procedure is described in United States Patent 4,302,565.

The feed streams of ethylene, other gaseous alpha-olefin(s), and hydrogen (optional) are preferably fed to the reactor recycle line as well as liquid alpha-olefin(s), if any, dienes (optional), and the cocatalyst solution. Optionally, the liquid cocatalyst can be fed directly to the fluidized bed. The partially activated or completely activated catalyst precursor is preferably injected into the fluidized bed as a solid or a mineral oil slurry. The product composition can be varied by changing the molar ratios of the comonomers introduced into the fluidized bed. The product is continuously discharged in granular or particulate form from the reactor as the bed level builds up with polymerization. The production rate is controlled by adjusting the catalyst feed rate and the ethylene partial pressure.

If a copolymer is desired, the alpha-olefin(s) (other than ethylene) can be present in a total amount of up to 15 percent by weight of the copolymer and are preferably included in the copolymer in a total amount of about 1 to about 10 percent by weight based on the weight of the copolymer.

The residence time of the mixture of reactants including gaseous and liquid reactants, catalyst, and resin in the fluidized bed can be in the range of about 1 to about 12 hours and is preferably in the range of about 2 to about 5 hours.

The product resin can be extruded into film or other forms in conventional extruders adapted for the particular form. Extruders and processes for extrusion are described in United States patents 4,814,135; 4,857,600; 5,076,988; and 5,153,382. Examples of various extruders, which can be used in forming film, for example, are a single screw type such as one modified with a blown film die and air ring and continuous take off equipment, a blown film extruder, and a slot cast extruder. A typical single screw type extruder can be described as one having a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and multiple heating zones from the rear heating zone to the front heating zone, the multiple sections and zones running from upstream to downstream. If it has more than one barrel, the barrels are connected in series. The length to diameter ratio of each barrel is in the range of about 16:1 to about 30:1. The extrusion can take place at temperatures in the range of about 160 to about 270 degrees C, and is preferably carried out at temperatures in the range of about 180 to about 240 degrees C.

The advantages of the invention are found in high catalyst activity, low hexane extractables, branch distribution, and temperature stability. In addition, various combinations of ligands, chlorinating agents, and cocatalyst can be used to optimize the performance of the catalyst system to meet product and process requirements. Use of the chlorinating agent (mix tank reagent) improves activity and hydrogen response dramatically in the case of titanium(acetylacetonate)₂(OR)₂ wherein each R is independently an alkyl group having 1 to 10 carbon atoms, less so in the case of titanium(acetylacetonate)₂Cl₂.

Conventional additives, which can be introduced into the blend, are exemplified by antioxidants, ultraviolet absorbers, antistatic agents, pigments, dyes, nucleating agents, fillers, slip agents, fire retardants, plasticizers, processing aids, lubricants, stabilizers, smoke inhibitors, viscosity control agents, and crosslinking agents, catalysts, and boosters, tackifiers, and anti-blocking agents. Aside from the fillers, the additives can be present in the blend in amounts of about 0.1 to about 10 parts by weight of additive for each 100 parts by weight of polymer blend. Fillers can be added in amounts up to 200 parts by weight and more for each 100 parts by weight of the blend.

All molecular weights are weight average molecular weights unless otherwise designated.

Patents and publications mentioned in this specification are incorporated by reference herein.

The invention is illustrated by the following examples.

### Examples

### Example 1. Laboratory scale preparation

A. Preparation of the titanium compound:
The preferred method for the preparation of titanium bis(acetylacetonate) dichloride is as follows:
100 cubic centimeters of hexane and 2.2 cubic centimeters of titanium tetrachloride are placed in an oven-dried, nitrogen-purged, 200 cubic centimeter airless glassware flask. To this colorless solution, 5.13 cubic centimeters of neat 2,4-pentanedione are added via a syringe over a period of approximately 5 minutes. The reaction mixture turns red orange. A precipitate begins to form immediately. The mixture is stirred for 1.25 hours at ambient temperature. The precipitate is allowed to settle, and the supernatant liquid is decanted. The solid is washed three times with 20 cubic centimeters of hexane, and dried down to an orange powder. The yield is 6.56 grams.
As another example of the titanium compound preparation, titanium bis(1,3-diphenyl-1,3- propanedionate)dichloride is prepared as follows: 1.3 cubic centimeters of titanium tetrachloride are added to 50 cubic centimeters of methylene chloride in an oven-dried, nitrogen-purged 200 cubic centimeter airless glassware flask. A solution of dibenzoylmethane/methylene dichloride is prepared in a dry, purged bottle and purged briefly with nitrogen. This is added to the titanium tetrachloride solution over a period of 20 minutes. The reaction mixture is a deep burgundy. The mixture is stirred at ambient temperature for another 30 minutes. About one third of the solvent is pumped off and it is allowed to sit for more than two hours.
The solid settles out leaving a very red supernatant liquid. The flask is chilled in an ice water bath and 20 cubic centimeters of hexane is added. The mixture is stirred and permitted to settle. The red supernatant liquid is decanted and the solid is washed with 10 cubic centimeters of hexane, then 20 cubic centimeters of hexane, and dried down under vacuum to a dark burgundy red powder. The yield is 6.462 grams.
B. Preparation of a catalyst composition for spray drying:
4.70 grams of anhydrous magnesium dichloride is transferred to a 200 cubic centimeter airless glassware flask in a dry box. The flask is removed from the box and fitted with a reflux condenser, nitrogen line, and oil bubbler. 100 cubic centimeters of freshly distilled THF are added , refluxed for several hours, and cooled to room temperature. 5.35 grams of titanium bis(1,3-diphenyl-1,3- propanedionate)dichloride in 20 cubic centimeters of THF is transferred by cannula to the MgCl₂/THF solution. It immediately dissolves to give a red solution. In rinsing the flask several times, 25 cubic centimeters more of THF is added.
8.56 grams of fumed silica is weighed out into a dry, nitrogen purged Wheaton™ bottle, in the air. The fumed silica is then purged for 20 to 30 minutes with nitrogen, taking care not to blow it out of the bottle. The precursor solution is transferred to the bottle by cannula.
C. The slurry produced is spray dried from a Buchi™ 190 laboratory scale unit. From the above procedure, 19 grams of a free flowing powder is recovered.
D. The precursor recovered in step C is slurried in hexane or mineral oil and the chlorinating agent (DMAC or EADC) is added at ambient temperature. The mixture is heated at 45 degrees C for 2 hours under nitrogen. If hexane is used, the resulting catalyst precursor is dried under vacuum to remove hexane, and slurried in mineral oil before use. If the reaction is done in oil, the resulting catalyst precursor is used as formed.

### Example 2. Large Scale Preparation

A. In this preparation of the catalyst precursor, titanium bis(ethyl acetoacetato)diisopropoxide is used as received from the manufacturer. B.
   1. 4000 grams of dry THF is charged into a vessel.
   2. 200 grams of MgCl₂ is charged into the vessel.
   3. The vessel is heated to dissolve the MgCl₂ at 70 to 75 degrees C jacket temperature and 10 psig for 5 hours.
   4. The solution is permitted to cool overnight.
   5. 204 grams of neat titanium bis(ethyl acetoacetato)diisopropoxide is added to the MgCl₂/THF solution at ambient temperature. There is no exotherm.
   6. The solutions are mixed for 1 hour at ambient temperature. The mixture turns a yellow/orange color.
   7. The solution is filtered as it is discharged to remove undissolved materials that could plug the spray nozzle. The discharge is into half gallon jugs containing 80 grams of hydrophobic fumed silica. A charge of 1060 grams of solution gives the desired silica content in the resulting slurry, i.e., 7 weight percent..
C. The slurry is spray dried from a Niro™ dryer equipped with a rotary atomizer. A free flowing yellow powder is recovered.
D. The dry precursor is slurried in mineral oil in a mix tank under nitrogen. The desired quantity of chlorinating agent (DMAC or EADC) is added, and the mixture is stirred at ambient temperature, 5 psig and 50 percent agitator speed for 30 minutes in the case of EADC or at 45 degrees C for 2 hours in the case of DMAC.

### POLYMERIZATION EXAMPLES

### Example 3. LLDPE.

Catalysts are prepared according to the procedure given in paragraphs A to C, laboratory scale preparation, above. The formula for the titanium compound used for each catalyst is set forth below. In cases where R = Cl, no chlorination step is carried out. Where R = isopropoxide (OiPr), chlorination is accomplished with 6 titanium compound equivalents of DMAC. A 1 liter stirred autoclave reactor is charged with 500 cubic centimeters of isobutane, 80 cubic centimeters of 1-hexene, 30 titanium compound equivalents of TEAL, and sufficient catalyst oil slurry to give a charge of 15 micromoles of titanium. The reactor is pressurized with 5 psig hydrogen, and the temperature is raised to 75 degrees C. Ethylene is fed to maintain a reactor pressure of 250 psig and the temperature is controlled at 85 degrees C. After 30 minutes, ethylene feed is stopped, the reactor is cooled and vented, and granular polyethylene is recovered. Results are given in Table I. Relative activity, hydrogen response, comonomer response, and molecular weight distribution can be varied by changing the titanium compound.
The general formula for the titanium compound can be found below in Notes to Examples and Tables, no. 18.

**Table I**

| Diketone | R | Activity | Flow Index | Density | PDI |
|---|---|---|---|---|---|
| A | OiPr | 82,000 | 0.73 | 0.9211 | 4.8 |
| B | OiPr | 72,800 | 3.49 | 0.9161 | 6.8 |
| A | Cl | 26,200 | 1.74 | 0.9317 | 4.2 |
| A | Cl* | 19,700 | 0.76 | 0.9235 | 4.8 |
| C | Cl | 19,000 | 5.90 | 0.9370 | 4.3 |
| D | Cl | 19,100 | 0.22 | ---- | 4.6 |
| E | Cl | 13,600 | 2.07 | 0.9372 | 4.4. |
| F | Cl | 6,200 | NF | 0.9294 | ---- |

| | | | | | |
|---|---|---|---|---|---|
| Activity = grams of polyethylene per millimole of titanium•hour•100 psi ethylene PDI from SEC = polydispersity index from size exclusion chromatography. * Catalyst has one diketone ligand and three chloride ligands. | | | | | |

### Example 4. Bimodal LLDPE.

Catalyst precursor (CAT II) is prepared according to the laboratory scale preparation using titanium bis(acetylacetonate)diisopropoxide and the chlorinating agents as listed in Table II. Polymerization is done in a stirred gas phase reactor to prepare high and low molecular weight components. These were then blended to simulate products made in a staged reactor process. Hexane extractables are measured on tape made from the final bimodal product. The results show that hexane extractables are lower than with the comparison catalyst precursor /TEAL cocatalyst) and are comparable in two cases to those obtained with comparison catalyst precursor /TMA cocatalyst. Also, the desired broadening of the high molecular weight component is seen in all cases with the catalyst precursor of the invention.
Comparison catalyst precursor (referred to as CAT IA or IB) and its preparation are described below in Note 5.

**Table II**

| Catalyst | Cocatalyst | Hexane Extractables | HMW PDI | LMW PDI |
|---|---|---|---|---|
| CAT IA | TEAL | 5% | 4.0 | 3 |
| CAT IA | TMA | 2.6% | 3.8 | 3 |
| EADC/CAT II | TEAL/CH₂Cl₂ | 3.1 % | 4.5 | 3 |
| MADC/DEAC/CATII | TEA1 | 3.9% | 6.0 to 6.6 | 3 |
| DMAC/CAT II | TEA1 | 2.6% | 5.1 | 3 |

### Example 5. HDPE.

Catalyst is prepared as above, laboratory scale, using titanium bis(acetylacetonate)diisopropoxide and 3.8 equivalents of EADC as the chlorinating agent (CAT III). Ethylene homopolymerizations are done in a 4 liter stirred autoclave reactor with a 200 gram NaCl bed, 100 equivalents of cocatalyst, sufficient catalyst oil slurry to provide 0.1 millimoles of titanium, and 35 psig hydrogen. Ethylene is fed to maintain a total pressure of 140 psig and the reactor temperature is controlled at 108 degrees C for 1 hour. The recovered polyethylene is washed to remove the salt, and dried. The results in Table III show higher activity for the invention catalyst compared to CAT IB with either TIBA or TEAL cocatalyst.

**Table III**

| Catalyst | Cocatalyst | Yield, grams |
|---|---|---|
| CAT IB | TEAL | 16 |
| CAT III | TEAL | 36 |
| | | |
| CAT IB | TIBA | 40 |
| CAT III | TIBA | 178 |

### Example 6. HDPE.

The same catalyst described in the example immediately above (CAT III) is run in a fluidized bed pilot plant reactor to make ethylene homopolymer at 160 psi ethylene, 108 degrees C, with TEAL cocatalyst. The residual titanium is 2 ppm, compared to 4.5 ppm when CAT IB is used as catalyst precursor under the same conditions.

### Example 7. Bimodal HDPE.

Catalyst is prepared according to the procedure described above for the large scale preparation, using titanium bis(ethyl acetoacetato)diisopropoxide and 6 equivalents of DMAC as chlorinating agent (CAT IV). This is run in the fluidized bed pilot plant reactor to make high density bimodal polyethylene in staged reactors. CAT IB is run under the same conditions. Both experiments are done with TEAL cocatalyst. The invention catalyst has higher activity, and produces resin with excellent bulk density with a large particle size and low fines. Results are given in Table IV.

**Table IV**

| Catalyst | CAT IB | CAT IV |
|---|---|---|
| residual titanium, ppm | 2 | 1 |
| resin average particle size | 0.02 inch | 0.03 inch |
| fines (thru 120 mesh) | 3.7 percent | 2.9 percent |
| bulk density, lbs/ft3 | 27.5 | 31 |

### Notes to Examples and Tables:

1. Density is measured by producing a plaque in accordance with ASTM D-1928, procedure C, and then testing as is via ASTM D-1505. The density is reported in gram per cubic centimeter.
2. Melt Index (g/10 min) is determined under ASTM D-1238, Condition E. It is measured at 190°C and reported as grams per 10 minutes.
3. Flow Index (g/10 min) is determined under ASTM D-1238, Condition F. It is measured at 10 times the weight used in the melt index test above.
4. Hexane extractables are the maximum extractable fraction in N-hexane at 50 degrees C. Results are reported in percent by weight.
5. CAT I is the comparison catalyst precursor. It is formed as described in United States Patent 5,290,745. The catalyst precursor and method of preparing same used in the above examples as the comparison catalyst precursor is the same composition and preparation method as example 1 of this patent. CAT 1A is partially activated as described in said example part (c) while CAT 1B is slurried in mineral oil and fed to the polymerization reactor without partial activation.
6. THF = tetrahydrofuran
7. DMAC = dimethylaluminum chloride
8. EADC = ethylaluminum dichloride
9. TEAL = triethylaluminum
10. PDI = polydispersity index
11. SEC = size exclusion chromatography
12. TMA = trimethylaluminum
13. TIBA = triisobutylaluminum
14. LLDPE = linear low density polyethylene
15. HDPE = high density polyethylene
16. HMW = high molecular weight
17. LMW = low molecular weight
18. The general formula for the titanium compound referred to in Example 3 is as follows:

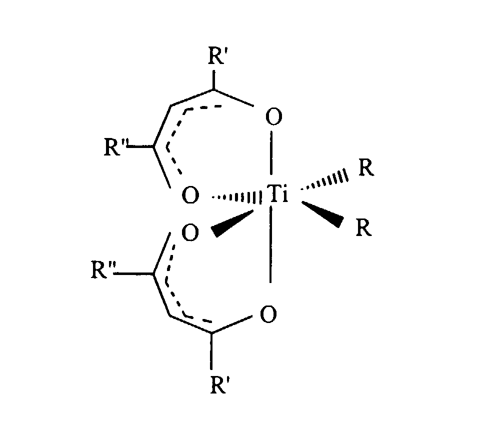

The formulas for the diketones are as follows:

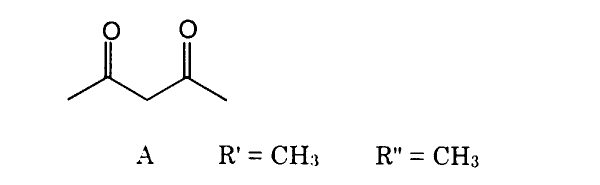

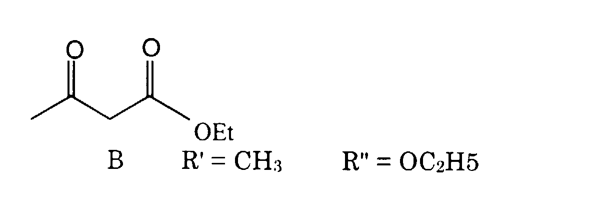

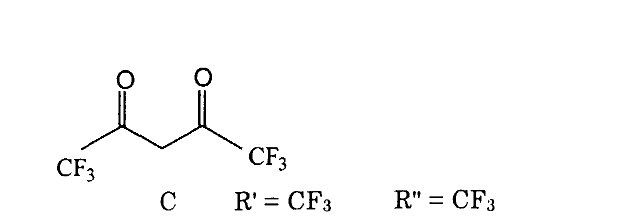

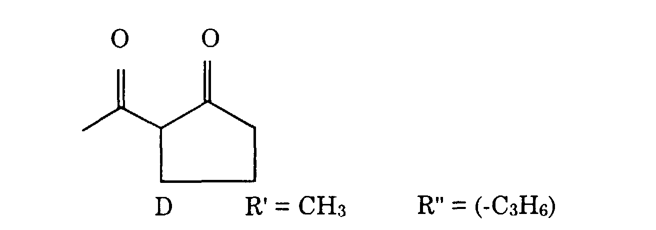

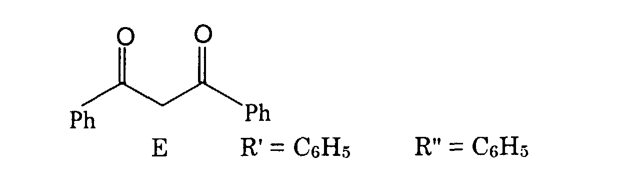

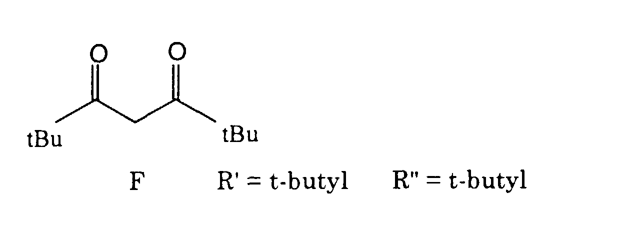

## Claims

1. A catalyst system comprising (a) as a precursor, a solid complex comprising a magnesium halide; a titanium compound containing at least one bidentate ligand wherein the titanium is in the tetravalent state; and, as an electron donor, one or more alcohols, ethers, or ketones, said complex being impregnated into an inert support or spray dried from an electron donor solution containing an inert filler; and (b) as a cocatalyst, one or more alkyl aluminum compounds.

2. The catalyst system defined in claim 1 which also comprises (c) a halocarbon promoter.

3. The catalyst system defined in claim 1 or 2 wherein the bidentate ligand is a diketone ligand.

4. The catalyst system defined in any one of the preceding claims wherein the electron donor is an aliphatic alcohol or an alkyl or cycloalkyl ether.

5. The catalyst system defined in any one of the preceding claims wherein the precursor is supported with silica or is spray dried with fumed silica as an inert filler.

6. The catalyst system defined in any one of the preceding claims wherein the cocatalyst is a trialkylaluminum compound.

7. The catalyst system defined in any one of the preceding claims wherein the solid supported or spray dried precursor is treated with a chlorinating agent.

8. A catalyst system comprising (a) as a precursor, a solid complex comprising an anhydrous magnesium chloride; a titanium compound containing at least one bidentate ligand, which is a 2,4-diketone substituted at the 1 and 5 positions or a 1,3-diketone substituted at the 2 position wherein the titanium is in the tetravalent state; and, as an electron donor, one or more aliphatic alcohols or alkyl or cycloalkyl ethers, said complex being impregnated into an inert silica support or spray dried from an electron donor solution containing a fumed silica inert filler, said solid supported or spray dried precursor having been treated with a chlorinating agent; and (b) as a cocatalyst, one or more trialkylaluminum compounds.

9. The catalyst system defined in claim 8 which also comprises (c) a halocarbon promoter.

10. A process for preparing a solid catalyst precursor comprising (a) combining a tetravalent titanium compound with a compound capable of providing a bidentate ligand therefor, under reaction conditions; (b) adding the product of step (a) to a solution of a magnesium halide in an electron donor, under reaction conditions, to form a complex; and (c) impregnating the complex from step (b), in solution form, into an inert support and drying same, or spray drying the complex from an electron donor solution containing an inert filler.

11. The process defined in claim 10 wherein the supported or spray dried complex is treated with a chlorinating agent.

12. A process for the preparation of polyethylene comprising contacting ethylene or a mixture of ethylene and one or more alpha-olefins with the catalyst system defined in any one of claims 1 to 9, under polymerization conditions, in one or two or more reactors connected in series.
